# EUROPÄISCHE PATENTSCHRIFT

(11) **EP 3 604 028 B1**
(45) Veröffentlichungstag und Bekanntmachung des Hinweises auf die Patenterteilung: **09.06.2021**
(21) Anmeldenummer: 19188551.6
(22) Anmeldetag: 26.07.2019
(51) Int. Cl.: B60N 2/07, B60N 2/08

(54) **SITZLÄNGSVERSTELLER**
SEAT LENGTH ADJUSTER
DISPOSITIF DE RÉGLAGE EN LONGUEUR D'UN SIÈGE

(30) Priorität: 02.08.2018 CN 201810870008
(43) Veröffentlichungstag der Anmeldung: 05.02.2020
(73) Patentinhaber: Adient Engineering and IP GmbH, 51399 Burscheid (DE); Adient Yanfeng Seating Mechanism Co., Ltd., New Area, Shanghai 201315 (CN)
(72) Erfinder: FLICK, Joachim, 42499 Hueckeswagen (DE); SPRENGER, Erik, 42929 Wermelskirchen (DE); WANG, Pan, Jiangsu, 215326 (CN); WU, Peigui, Shanghai, 201315 (CN)
(74) Vertreter: Liedtke & Partner Patentanwälte

(56) Entgegenhaltungen:
- EP-A1- 0 842 808
- WO-A1-2008/093918
- DE-A1- 10 050 957
- FR-A1- 2 852 896

## Beschreibung

Die Erfindung betrifft einen Sitzlängsversteller für einen Fahrzeugsitz.

Sitzlängsversteller zur Verstellung eines Fahrzeugsitzes in Längsrichtung eines Fahrzeugs sind allgemein bekannt. Beispielsweise ist aus der DE 100 50 957 A1 ein Sitzlängsversteller bekannt, bei welchem ein Verriegelungsteil kipp- und/oder drehbar ist und sich durch eine Winkelbewegung gegenüber Ober- und Unterschiene in seiner Verriegelungsstellung spielfrei festlegt.

Aufgabe der vorliegenden Erfindung ist es, einen Sitzlängsversteller anzugeben, welcher in einer Verriegelungsstellung weitgehend spielfrei verriegelt und gegebenenfalls bei einer möglichen mechanischen Beanspruchung sicher verriegelt.

Die Aufgabe wird erfindungsgemäß gelöst mit einem Sitzlängsversteller mit den Merkmalen des unabhängigen Patentanspruchs 1.

Vorteilhafte Weiterbildungen der Erfindung sind Gegenstand der Unteransprüche.

Der erfindungsgemäße Sitzlängsversteller, insbesondere für einen Fahrzeugsitz, umfasst
- zumindest zwei im Abstand voneinander angeordnete Schienen-Paare, die jeweils aus zwei Schienen, einer Oberschiene und einer Unterschiene gebildet sind, wobei die Oberschiene mit, insbesondere schlitz- oder fensterartigen, Öffnungen versehen ist und die Unterschiene, insbesondere zahnartige oder zahnkranz- oder kronenartige oder u-förmige, Durchbrüche aufweist, und
- wenigstens ein federbelastetes, bewegbares, plattenförmiges Verriegelungsteil, das an der Oberschiene beweglich gehalten ist und das in einer Verriegelungsstellung eine Bewegung der Oberschiene in der Unterschiene sperrt und das an seinen beiden gegenüberliegenden Längsseiten zahnartige Vorsprünge trägt, die von einer Freigabe- oder Entriegelungsstellung in die Verriegelungsstellung durch eine Feder sowohl in die Öffnungen als auch in die Durchbrüche bewegbar sind,
wobei das Verriegelungsteil die Oberschiene und Unterschiene in der Verriegelungsstellung festlegt, wobei die Öffnungen und/oder die Durchbrüche zumindest einen Kontaktbereich für die zahnartigen Vorsprünge des Verriegelungsteils aufweisen und zumindest einige der zahnartigen Vorsprünge an beiden Zahnflanken jeweils einen Unterschnitt aufweisen, wobei in der Verriegelungsstellung des Verriegelungsteils eine aus dem Unterschnitt resultierende überstehende Kante an der jeweiligen Zahnflanke der zahnartigen Vorsprünge dem Kontaktbereich in der Öffnung und/oder in dem Durchbruch gegenüberliegt und/oder diesen berührt, zum Beispiel an diesem Kontaktbereich anliegt. Hierdurch legt das Verriegelungsteil die Oberschiene und Unterschiene in der Verriegelungsstellung weitgehend spielfrei fest.

Unter einem Unterschnitt der jeweiligen Zahnflanke des jeweiligen zahnartigen Vorsprungs wird insbesondere ein gewolltes Entfernen, insbesondere Wegschneiden, Verformen oder Verprägen eines Teils der Zahnflanke verstanden. Dabei wird ein Teil der Zahnflanke derart weggeschnitten, verformt oder verprägt, dass der zahnartige Vorsprung im Vertikalschnitt eine obere überstehende Kante (auch Bund- oder Randabschnitt) mit einem von dieser Kante abgehenden Schaft oder Abschnitt aufweist. Mit anderen Worten: Der zahnartige Vorsprung weist annähernd eine T-Form auf. Die Öffnungen und Durchbrüche sind als Aufnahmeöffnungen für die zahnartigen Vorsprünge des Verriegelungsteils in dessen Verriegelungsstellung ausgebildet.

Ein Aspekt sieht vor, dass die jeweilige Öffnung und/oder der jeweilige Durchbruch einander gegenüberliegende innere Wandflächen aufweisen und die überstehenden Kanten der beiden Zahnflanken zumindest eines der zahnartigen Vorsprünge in der Verriegelungsstellung an den inneren Wandflächen in dem jeweiligen Kontaktbereich spaltfrei anliegen. Alternativ können die überstehenden Kanten mit einem Spalt diesem Kontaktbereich gegenüberliegen. Beim spaltfreien Anliegen liegen die überstehenden Kanten zumindest eines der zahnartigen Vorsprünge insbesondere mit Kraftschluss, beispielsweise reibschlüssig, an der inneren Wandflächen im jeweiligen Kontaktbereich an oder stehen im Eingriff mit diesen inneren Wandflächen. Dies ermöglicht eine weitgehend geräuscharme Verriegelungsstellung des Verriegelungsteils.

Ein weiterer Aspekt sieht vor, dass die jeweilige überstehende Kante und der zugehörige Kontaktbereich derart eingerichtet sind, dass bei einer insbesondere unerwünschten Bewegung, wie zum Beispiel einer Horizontalbewegung von Oberschiene und Unterschiene zueinander oder von Unterschiene und Verriegelungsteil zueinander in Längsrichtung in Verriegelungsstellung des Verriegelungsteils, infolge einer insbesondere äußeren mechanischen Beanspruchung zumindest eine der überstehenden Kanten in Eingriff oder in einen weiteren Eingriff, insbesondere in Formschluss, mit der inneren Wandfläche im zugehörigen Kontaktbereich gelangt. Durch den weiteren Eingriff zumindest einer der überstehenden Kanten, beispielsweise durch Formschluss mit der inneren Wandfläche in dem zugehörigen Kontaktbereich der Öffnung oder des Durchbruchs, wird das Verriegelungsteil in der Verriegelungsstellung sicher festgelegt und fixiert.

Beispielsweise sind die jeweilige überstehende Kante und die innere Wandfläche derart eingerichtet, dass bei einer unerwünschten HorizontalBewegung der Oberschiene zu der Unterschiene oder einer Relativbewegung von Oberschiene und Unterschiene zueinander oder von Unterschiene und Verriegelungsteil in Längsrichtung jeweils in der Verriegelungsstellung des Verriegelungsteils infolge der mechanischen Beanspruchung die überstehende Kante im zugehörigen Kontaktbereich in diese innere Wandfläche eindringt und/oder diese innere Wandfläche verformt, insbesondere plastisch verformt, oder deformiert. Infolge des Eingriffs der jeweiligen überstehenden Kante mit der inneren Wandfläche im Kontaktbereich kann es zu einer Verformung, insbesondere einer plastischen Verformung (auch Plastifizierung genannt), der inneren Wandfläche kommen. Durch einen derartigen Eingriff des Verriegelungsteils in die Unterschiene oder durch eine derartige Verformung wird eine Vertikalbewegung des Verriegelungsteils in seine Freigabe- oder Entriegelungsstellung weitgehend vermieden, so dass der Fahrzeugsitz sicher in der eingestellten Längsposition gehalten ist.

Beispielweise gelangt die betreffende überstehende Kante oder der Bund oder Rand mit der zugehörigen inneren Wandfläche der Öffnung oder des Durchbruchs in eine Press- oder Keilverbindung, insbesondere Flachkeilverbindung. Dabei kann die innere Wandfläche gerade verlaufen. Verläuft die innere Wandfläche beispielsweise schräg nach innen oder keilförmig wird der Formschluss entsprechend verstärkt und die Fixierung des Verriegelungsteils in der Verriegelungsstellung weiter gesichert.

Eine Weiterbildung sieht vor, dass bei einer insbesondere unerwünschten Bewegung, insbesondere einer Horizontalbewegung von Ober- und Unterschienen zueinander oder von Unterschiene und Verriegelungsteil zueinander in Längsrichtung in Verriegelungsstellung des Verriegelungsteils, infolge einer, insbesondere äußeren, mechanischen Beanspruchung, zum Beispiel bei einem Unfall, die jeweilige überstehende Kante und der zugehörige Kontaktbereich derart eingerichtet sind, dass die überstehende Kante den Kontaktbereich deformiert und/oder in diesen eindringt.

Hierdurch ist sichergestellt, dass das Verriegelungsteil die Oberschiene und Unterschiene auch bei einer mechanischen Beanspruchung sicher miteinander verriegelt. Herkömmliche Verriegelungsteile mit herkömmlichen zahnartigen Vorsprüngen ohne Unterschnitt können bei starker mechanischer Beanspruchung aus der Verriegelungsstellung gleiten und eine unerwünschte Bewegung zwischen Oberschiene und Unterschiene auslösen. Insbesondere deformiert die Kante den Kontaktbereich derart und/oder dringt in diesen Kontaktbereich derart ein, dass die Oberschiene und Unterschiene in der Verriegelungsstellung verbleiben. Somit wird mittels der aus dem Unterschnitt resultierenden Kante, welche in die Flanken der Öffnungen oder Durchbrüche bei Beanspruchung eindringt oder diese Flanken deformiert, ein Öffnen der Verriegelung vermieden.

Zur Unterstützung einer sicheren Verriegelung auch bei einer ungewollten starken mechanischen Beanspruchung weisen die Öffnungen und/oder die Durchbrüche schräge oder keilförmige Flanken auf. Beispielsweise weisen die Öffnungen oder Durchbrüche im Wesentlichen eine V-Form oder eine U-Form mit schrägen Flanken auf. Dabei ist ein Flankenabstand zwischen den Flanken einer Öffnung oder eines Durchbruchs im Kontaktbereich mit der überstehenden Kante schmaler als der Flankenabstand im Bereich des Unterschnitts. Beispielsweise weisen die zahnartigen Vorsprünge im Schnitt, in Bezug auf das Fahrzeug im Längsschnitt, im Wesentlichen eine T-Form auf. Dabei liegt der Querbalken der T-Form im Kontaktbereich an den Flanken, insbesondere inneren Wandflächen, der Öffnungen oder Durchbrüche und somit im Bereich des geringen Flankenabstands oder spaltfreien Eingriffs an.

In einer weiteren Ausführungsform sind zumindest die Kontaktbereiche der Unterschiene und/oder der Oberschiene aus einem weicheren Material gebildet als das Material des Verriegelungsteils und/oder der zahnartigen Vorsprünge. Beispielsweise sind die Unterschiene und die Oberschiene aus einem Metallblech, insbesondere einem hochfesten Metallblech, insbesondere einem Metallblech mit einer Dicke beispielsweise zwischen 1,3 mm und 3 mm, insbesondere 1,4 mm, und/oder einer Festigkeit von >600 N/mm², und das Verriegelungsteil aus einem massiven Metallkörper, insbesondere aus einem harten oder gehärteten Stahlkörper, mit einer Dicke beispielsweise zwischen 1,5 mm bis 4 mm, insbesondere 2,5 mm, und einer Festigkeit von >1.000 N/mm² gebildet.

Eine mögliche Ausführungsform sieht vor, dass alle zahnartigen Vorsprünge an beiden Zahnflanken einen Unterschnitt aufweisen. Dies ermöglicht eine besonders sichere Verriegelung von Oberschiene und Unterschiene.

Ein weiterer Aspekt sieht vor, dass der Unterschnitt beispielsweise mittels eines Umformschritts in die zahnartigen Vorsprünge eingebracht ist. Insbesondere kann der Unterschnitt in einem Presswerkzeug mittels eines Schnittspalts oder in einem Stanzwerkzeug oder in einem Prägewerkzeug mittels eines Stempels eingebracht werden. Auch kann der Unterschnitt in einem Schneidpresswerkzeug mittels einer Hinterschneidung oder eines Freistichs oder mittels Stoßens eingebracht werden. Dies kann in einem Umformprozess mit der Herstellung des Verriegelungsteils selbst erfolgen. Alternativ kann der Unterschnitt in einem separaten Umformschritt in die zahnartigen Vorsprünge eingebracht werden.

Ausführungsbeispiele der Erfindung werden anhand von Zeichnungen näher erläutert. Dabei zeigen:
- Figur 1: schematisch in Seitendarstellung ein Ausführungsbeispiel eines Längsverstellers für einen Sitz,
- Figur 2: schematisch in perspektivischer Darstellung ein Ausführungsbeispiel eines Längsverstellers mit zwei im Abstand voneinander angeordneten Schienen-Paaren,
- Figuren 3A bis 3D: schematisch verschiedene Ansichten eines Ausführungsbeispiels für ein Schienen-Paar des Längsverstellers,
- Figuren 4: bis 6 schematisch verschiedene Schnittdarstellung des Schienen-Paares der Figuren 3C und 3D,
- Figuren 7A bis 7C: schematisch jeweils in Schnittdarstellung eine Unterschiene mit im Kontaktbereich anliegenden überstehenden Kanten, die aus Unterschnitten in zahnartigen Vorsprüngen eines Verriegelungsteils resultieren,
- Figur 8: schematisch in Schnittdarstellung einen Durchbruch in der Unterschiene mit einer in den Kontaktbereich des Durchbruchs an einer Seitenflanke eingedrungenen Kante eines der zahnartigen Vorsprünge nach einer starken mechanischen Beanspruchung, und
- Figur 9: schematisch in vergrößerter Schnittdarstellung den Durchbruch in der Unterschiene mit der in den Kontaktbereich des Durchbruchs an der Seitenflanke eingedrungenen Kante eines der zahnartigen Vorsprünge nach einer starken mechanischen Beanspruchung im Vergleich zu der Kante vor der Beanspruchung.

Einander entsprechende Teile sind in allen Figuren mit den gleichen Bezugszeichen versehen.

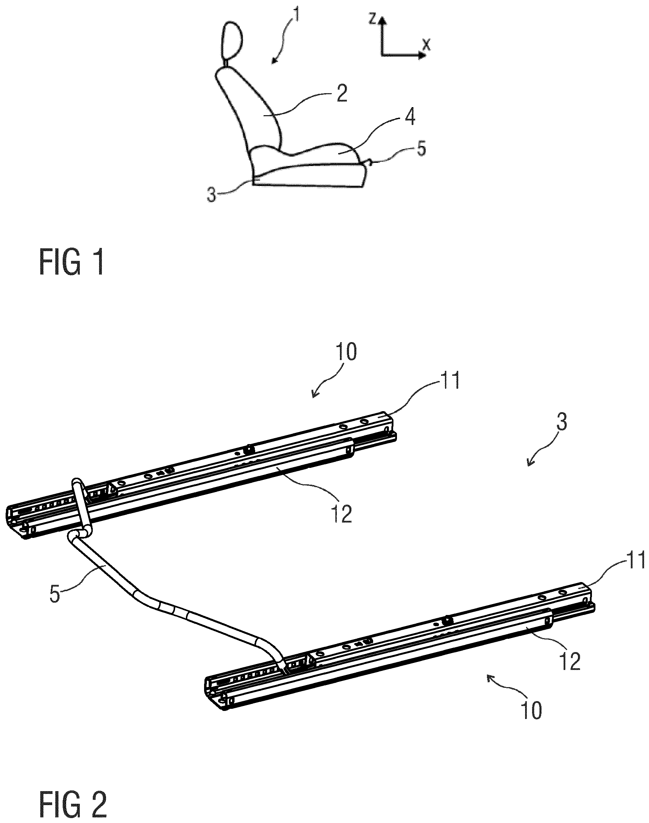

**Figur 1** zeigt schematisch in Seitendarstellung ein Ausführungsbeispiel einen Sitz 1 mit einer Rückenlehne 2 und einem Sitzteil 4. Zur Verstellung des Sitzes 1 in Längsrichtung X eines Fahrzeugs umfasst der Sitz 1 einen Längsversteller 3, auch Sitzlängsversteller 3 genannt. Zur Betätigung des Längsverstellers 3 umfasst der Sitz 1 ein Betätigungselement 5, zum Beispiel einen Betätigungsbügel, der unter dem Sitz 1 nach vorne zum Greifen vorsteht.

**Figur 2** zeigt schematisch in perspektivischer Darstellung ein Ausführungsbeispiel für den Längsversteller 3. Der Längsversteller 3 umfasst zwei im Abstand voneinander angeordnete Schienen-Paare 10, die jeweils aus zwei Schienen, einer Oberschiene 11 und einer Unterschiene 12 gebildet sind.

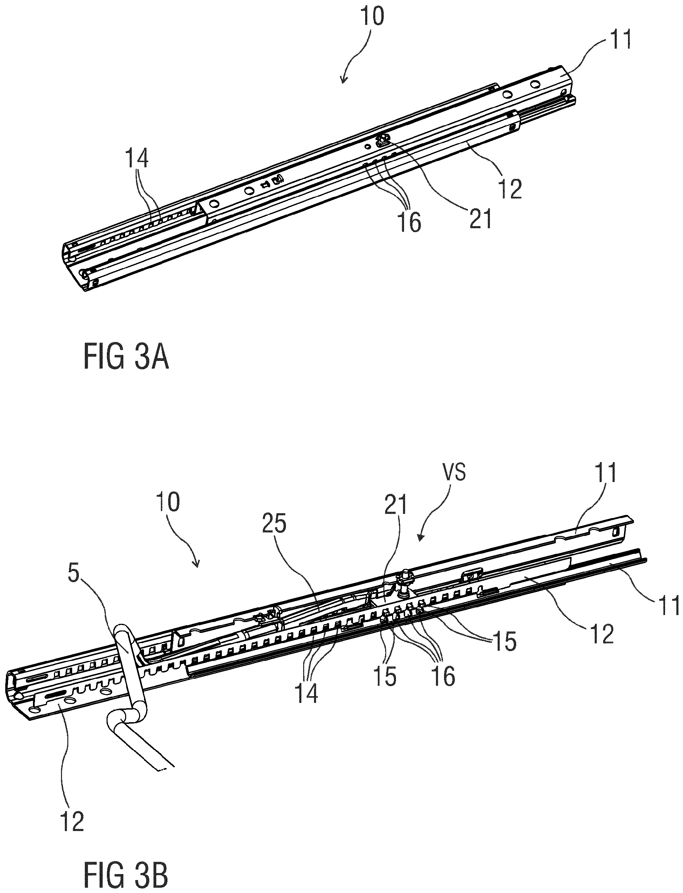

**Figuren 3A bis 3D** zeigen schematisch verschiedene Ansichten eines Ausführungsbeispiels für ein Schienen-Paar 10 des Längsverstellers 3.

**Figur 3A** zeigt das Schienen-Paar 10 in perspektivischer Darstellung.

**Figur 3B** zeigt das Schienen-Paar 10 in teilweise aufgeschnittener Ansicht, um Details im Inneren des Schienen-Paares 10 darzustellen.

Die Oberschiene 11 ist mit, insbesondere schlitzförmigen, Öffnungen 16 versehen. Die Unterschiene 12 weist Durchbrüche 14 auf, die beispielsweise zahnartig oder zahnkranzartig ausgebildet sind.

Wenigstens ein federbelastetes, bewegbares Verriegelungsteil 21 ist an der Oberschiene 11 gehalten. Insbesondere ist das wenigstens eine federbelastete Verriegelungsteil 21 an der Oberschiene 11 bewegbar, insbesondere vertikal bewegbar, gehalten.

In einer Verriegelungsstellung VS (gezeigt in Figuren 3B, 4 bis 9) des Verriegelungsteils 21 sperrt dieses mittels zahnartiger Vorsprünge 15 eine Bewegung der Oberschiene 11 in der Unterschiene 12. Die zahnartigen Vorsprünge 15 sind an beiden gegenüberliegenden Längsseiten des Verriegelungsteils 21 vorgesehen.

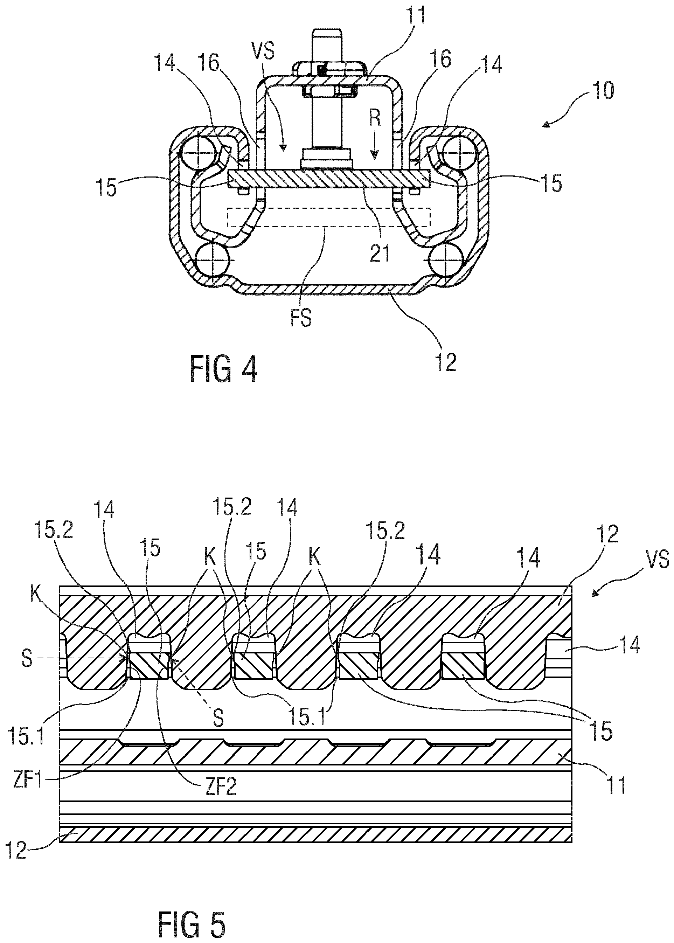

Die zahnartigen Vorsprünge 15 sind von einer Freigabestellung FS (gezeigt in Figur 4 durch gestrichelte Linie) in die Verriegelungsstellung VS durch eine Feder 25 oder ein elastisches Element sowohl in die Öffnungen 16 als auch in die Durchbrüche 14 bewegbar. Die Feder 25 oder das elastische Element wird beispielsweise mittels des Betätigungselements 5 betätigt. Die Feder 25 oder das elastische Element ist insbesondere als eine Blattfeder bzw. ein elastisches Profilelement, insbesondere ein federndes Metallblech, oder in einer anderen Form, zum Beispiel als eine Trompetenfeder, ausgebildet.

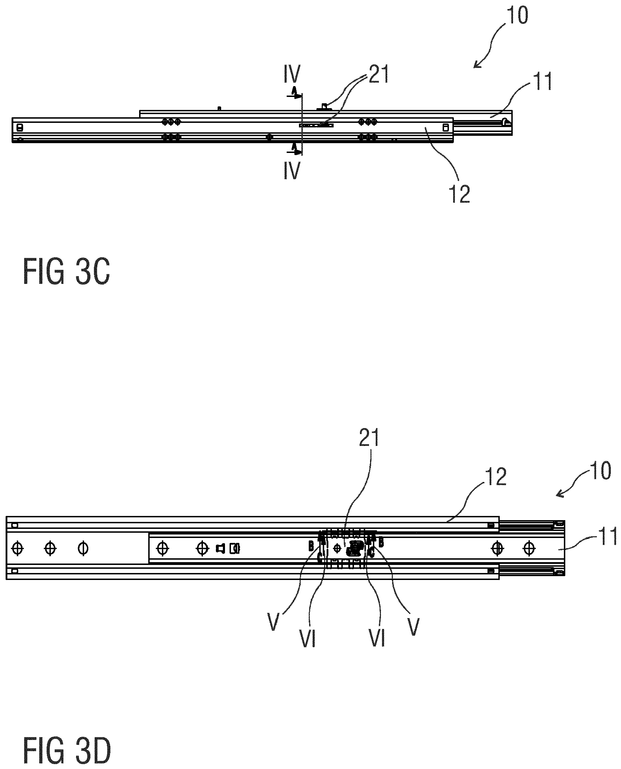

**Figur 3C** zeigt das Schienenpaar 10 in Seitenansicht und **Figur 3D** zeigt das Schienenpaar 10 in Draufsicht auf die Oberschiene 11.

**Figuren 4 bis 6** zeigen schematisch verschiedene Schnittdarstellung des Schienen-Paares 10 der Figuren 3C und 3D.

**Figur 4** zeigt einen Querschnitt der Figur 3C im Bereich des Verriegelungsteils 21, welches mit seinen zahnartigen Vorsprüngen 15 in die Öffnungen 16 und Durchbrüche 14 in der Verriegelungsstellung VS eingreift, so dass die Oberschiene 11 und die Unterschiene 12 miteinander gegen ein Verschieben verriegelt sind.

Das Verriegelungsteil 21 trägt an seinen beiden gegenüberliegenden Längsseiten die zahnartigen Vorsprünge 15, die von der Freigabestellung FS in die Verriegelungsstellung VS sowohl in die Öffnungen 16 als auch in die Durchbrüche 14 bewegbar sind. Dabei legt das Verriegelungsteil 21 die Oberschiene 11 und Unterschiene 12 in der Verriegelungsstellung VS fest.

**Figur 5** zeigt einen Längsschnitt der Figur 3D im Bereich der Unterschiene 12 mit den Durchbrüchen 14, in welche die zahnartigen Vorsprünge 15 des Verriegelungsteils 21 in der Verriegelungsstellung VS eingreifen.

Zumindest einige der zahnartigen Vorsprünge 15 weisen an ihren Zahnflanken ZF1, ZF2 jeweils einen Unterschnitt 15.1 auf, wobei in der Verriegelungsstellung VS des Verriegelungsteils 21 eine aus dem Unterschnitt 15.1 resultierende überstehende Kante 15.2 an der jeweiligen Zahnflanke ZF1, ZF2 dem Kontaktbereich K in der jeweiligen Öffnung 16 bzw. im Durchbruch 14 zumindest gegenüberliegt. Dabei kann die überstehende Kante 15.2 in der Verriegelungsstellung VS diesen Kontaktbereich K berühren und somit spaltfrei anliegen oder in einem Abstand und somit mit einem Spalt S diesem Kontaktbereich K gegenüberliegen.

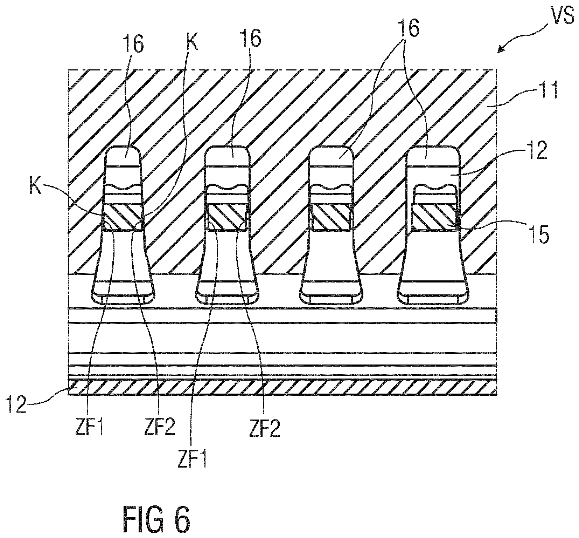

**Figur 6** zeigt einen Längsschnitt der Figur 3D im Bereich der Oberschiene 11 mit den, insbesondere schlitzartigen, Öffnungen 16, in welche die zahnartigen Vorsprünge 15 des Verriegelungsteils 21 in der Verriegelungsstellung eingreifen.

Die Öffnungen 16 der Oberschiene 11 und/oder die Durchbrüche 14 der Unterschiene 12 weisen jeweils zumindest einen Kontaktbereich K für die zahnartigen Vorsprünge 15 des Verriegelungsteils 21 an den jeweiligen inneren Wandflächen W1, W2 auf.

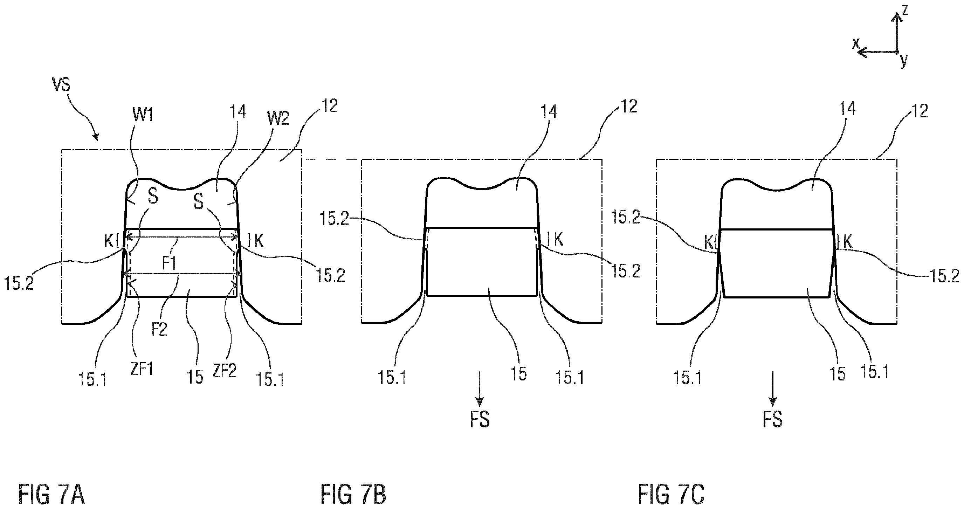

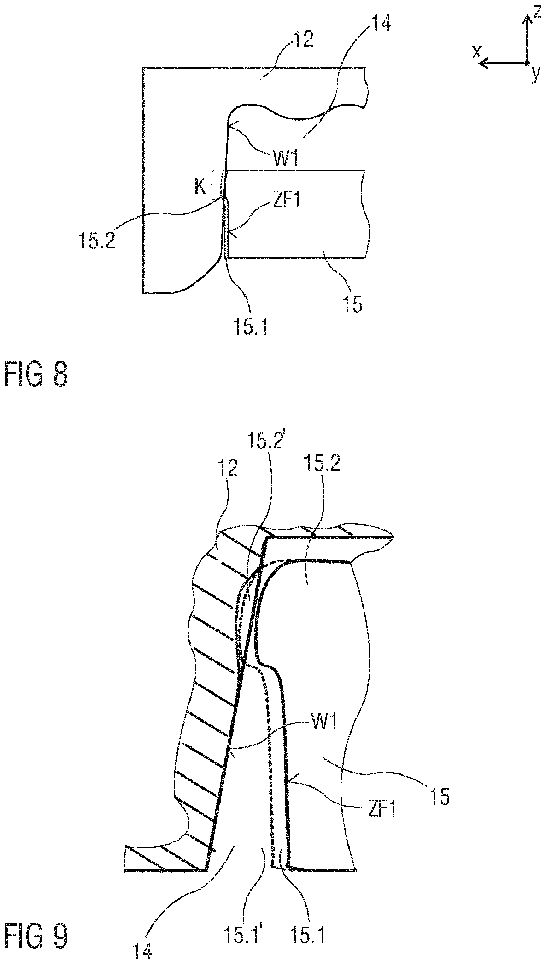

Zumindest einige der zahnartigen Vorsprünge 15 weisen an beiden Zahnflanken ZF1, ZF2 den Unterschnitt 15.1 auf, der in den nachfolgenden Figuren 7 und 8 am Beispiel der Unterschiene 12 näher beschrieben ist.

Eine aus dem Unterschnitt 15.1 resultierende überstehende Kante 15.2 an der jeweiligen Zahnflanke ZF1, ZF2 der Vorsprünge 15 liegt dem Kontaktbereich K in der Verriegelungsstellung VS gegenüber und/oder berührt diesen Kontaktbereich K.

**Figuren 7A bis 7C** zeigen schematisch drei Schnittdarstellungen desselben Ausschnitts der Unterschiene 12 mit einem Durchbruch 14 und einem in diesen eingreifenden zahnartigen Vorsprung 15 in Verriegelungsstellung VS des Verriegelungsteils 21 in verschiedenen Belastungszuständen.

In **Figur 7A** berührt die überstehende Kante 15.2 des Vorsprungs 15 den Kontaktbereich K an den Flanken und somit an den inneren Wandflächen W1, W2 des Durchbruchs 14. Die Kante 15.2 liegt weitgehend spaltfrei an den inneren Wandflächen W1, W2 an. Alternativ kann die überstehende Kante 15.2 von den inneren Wandflächen W1, W2 mit einem kleinen Spalt S beabstandet sein (gestrichelte Darstellung). Die Unterschiene 12 ist im normalen Belastungszustand gezeigt.

In **Figur 7B** ist die Unterschiene 12 aufgrund einer starken mechanischen Belastung in Vertikalrichtung Z oder in Längsrichtung X gegenüber dem Zustand in Figur 7A leicht gebogen oder gestaucht, insbesondere in Richtung R des Verriegelungsteils 21 und dessen Vorsprünge 15 gedrückt. Dadurch kann die überstehende Kante 15.2 im Kontaktbereich K an den Flanken des Durchbruchs 14 stärker kontaktieren und den Kontaktbereich K deformieren oder in diesen eingreifen, wie dies in **Figur 7C** dargestellt ist.

Beispielsweise sind die jeweilige überstehende Kante 15.2 und der zugehörige Kontaktbereich K derart eingerichtet, dass bei einer Bewegung, insbesondere einer Horizontalbewegung von Oberschiene 11 und Unterschiene 12 zueinander oder der Unterschiene 12 und des Verriegelungsteils 21 zueinander in Längsrichtung X jeweils in der Verriegelungsstellung VS des Verriegelungsteils 21, infolge einer mechanischen Beanspruchung zumindest eine Seite der überstehenden Kanten 15.2 in Eingriff oder in weiteren Eingriff mit der inneren Wandfläche WF1, WF2 im zugehörigen Kontaktbereich K gelangt. Beispielsweise dringt eine der Seiten oder dringen beide Seiten der überstehende Kante 15.2 derart in die innere Wandfläche WF1 und/oder WF2 im zugehörigen Kontaktbereich K ein, dass diese innere Wandfläche WF1 und/oder WF2 verformt, insbesondere plastisch verformt, oder deformiert wird.

**Figur 8** zeigt schematisch in vergrößerter Schnittdarstellung den Durchbruch 14 in der Unterschiene 12 mit der in den Kontaktbereich K des Durchbruchs 14 an einer Seitenflanke eingedrungenen Kante 15.2 des zahnartigen Vorsprungs 15 nach einer starken mechanischen Beanspruchung.

Ein solches Eindringen der Kante 15.2 in den Kontaktbereich K der Unterschiene 12 und ein daraus resultierendes Verformen, insbesondere plastisches Verformen der inneren Wandfläche WF1 und/oder WF2 im Kontaktbereich K stellt bzw. stellen sicher, dass die Oberschiene 11 und die Unterschiene 12 in der Verriegelungsstellung VS verbleiben. Somit wird mittels der aus dem Unterschnitt 15.1 resultierenden Kante 15.2, welche in die Flanken der Durchbrüche 14 bei einer Beanspruchung eindringt oder diese Flanken deformiert, ein Öffnen der Verriegelung vermieden.

Zur Unterstützung einer sicheren Verriegelung auch bei einer ungewollten starken mechanischen Beanspruchung weisen die Öffnungen 16 und/oder die Durchbrüche 14 schräge oder keilförmige Flanken auf. Beispielsweise weisen die Durchbrüche 14 im Wesentlichen eine U-Form mit schrägen Flanken auf. Dabei ist ein Flankenabstand F1 zwischen den Flanken des Durchbruchs 14 im Kontaktbereich K mit der überstehenden Kante 15.2 schmaler oder kleiner als der Flankenabstand F2 im Bereich des Unterschnitts 15.1, wie in Figur 7A gezeigt ist.

Darüber hinaus können die zahnartigen Vorsprünge 15 im Schnitt, in Bezug auf das Fahrzeug im Längsschnitt, im Wesentlichen eine T-Form aufweisen. Dabei liegt der Querbalken der T-Form im Kontaktbereich K an den Flanken der Durchbrüche 14 und somit im Bereich des kleineren Flankenabstands F1 an.

In einer weiteren Ausführungsform sind zumindest die Kontaktbereiche K der Unterschiene 12 und/oder der Oberschiene 11 aus einem weicheren Material gebildet als das Material des Verriegelungsteils 21 und/oder der zahnartigen Vorsprünge 15 des Verriegelungsteils. Beispielsweise sind die Unterschiene 12 und die Oberschiene 11 aus einem Metallblech, insbesondere einem hochfesten Metallblech, insbesondere einem Metallblech mit einer Festigkeit von >600N/mm2, und das Verriegelungsteil 21 aus einem massiven Metallkörper, insbesondere aus einem gehärteten Stahlkörper, gebildet.

Des Weiteren kann nur eine der zahnartigen Vorsprünge 15 oder können alle zahnartigen Vorsprünge 15 an beiden Zahnflanken einen Unterschnitt 15.1 und eine daraus resultierende überstehende Kante 15.2 aufweisen.

**Figur 9** zeigt schematisch in vergrößerter Schnittdarstellung den Durchbruch 14 in der Unterschiene 12 mit der in den Kontaktbereich K des Durchbruchs 14 an der Seitenflanke eingedrungenen Kante 15.2' und des Unterschnitts 15.1' eines der zahnartigen Vorsprünge 15 nach einer starken mechanischen Beanspruchung im Vergleich zu der Kante 15.2 und dem Unterschnitt 15.1 vor der Beanspruchung.

### Bezugszeichenliste

- 1: Sitz
- 2: Rückenlehne
- 3: Sitzlängsversteller
- 4: Sitzteil
- 5: Betätigungselement
- 10: Schienen-Paar
- 11: Oberschiene
- 12: Unterschiene
- 14: Durchbruch
- 15: zahnartiger Vorsprung
- 15.1, 15.1': Unterschnitt
- 15.2, 15.2': Kante
- 16: Öffnung
- 21: Verriegelungsteil
- 25: Feder

- FS: Freigabestellung
- K: Kontaktbereich
- F1: kleiner Flankenabstand
- F2: großer Flankenabstand
- R: Richtung
- S: Spalt
- VS: Verriegelungsstellung
- W1, W2: innere Wandfläche
- X: Längsrichtung
- Z: Vertikalrichtung
- ZF1, ZF2: Zahnflanken

## Patentansprüche

1. Sitzlängsversteller (3), insbesondere für einen Fahrzeugsitz, umfassend zumindest:
- zwei im Abstand voneinander angeordnete Schienen-Paare (10), die jeweils aus zwei Schienen, einer Oberschiene (11) und einer Unterschiene (12), gebildet sind, wobei die Oberschiene (11) mit Öffnungen (16, 16') versehen ist und die Unterschiene (12) Durchbrüche (14) aufweist, und
- wenigstens ein federbelastetes, bewegbares Verriegelungsteil (21), das an der Oberschiene (11) gehalten ist und das in einer Verriegelungsstellung (VS) eine Bewegung der Oberschiene (11) in der Unterschiene (12) sperrt und das an seinen beiden gegenüberliegenden Längsseiten zahnartige Vorsprünge (15) trägt, die von einer Freigabestellung (FS) in die Verriegelungsstellung (VS) sowohl in die Öffnungen (16) als auch in die Durchbrüche (14) bewegbar sind,
wobei das Verriegelungsteil (21) die Oberschiene (11) und Unterschiene (12) in der Verriegelungsstellung (VS) festlegt, wobei die Öffnungen (16) und/oder die Durchbrüche (14) Kontaktbereiche (K) für die zahnartigen Vorsprünge (15) des Verriegelungsteils (21) aufweisen und zumindest einige der zahnartigen Vorsprünge (15) an beiden Zahnflanken (ZF1, ZF2) jeweils einen Unterschnitt (15.1) aufweisen,
wobei in der Verriegelungsstellung (VS) des Verriegelungsteils (21) eine aus dem Unterschnitt (15.1) resultierende überstehende Kante (15.2) an der jeweiligen Zahnflanke (ZF1, ZF2) dem Kontaktbereich (K) in der jeweiligen Öffnung (16) bzw. im Durchbruch (14) gegenüberliegt und/oder diesen Kontaktbereich (K) berührt.

2. Sitzlängsversteller (3) nach Anspruch 1,
wobei bei einer Horizontalbewegung von Oberschiene (11) und Unterschiene (12) zueinander oder von Unterschiene (12) und Verriegelungsteil (21) zueinander in Längsrichtung (X) jeweils in der Verriegelungsstellung (VS) des Verriegelungsteils (21) infolge einer mechanischen Beanspruchung die überstehende Kante (15.2) und der Kontaktbereich (K) derart eingerichtet ist, dass die überstehende Kante (15.2) den Kontaktbereich (K) deformiert und/oder in diesen eindringt.

3. Sitzlängsversteller (3) nach Anspruch 1 oder 2, wobei die jeweilige Öffnung (16) und/oder der jeweilige Durchbruch (14) einander gegenüberliegende innere Wandflächen (WF1, WF2) aufweisen und die überstehenden Kanten (15.2) der beiden Zahnflanken (ZF1, ZF2) zumindest eines der zahnartigen Vorsprünge (15) in der Verriegelungsstellung (VS) an den inneren Wandflächen (WF1, WF2) in dem jeweiligen Kontaktbereich (K) spaltfrei anliegen oder mit einem Spalt (S) diesem Kontaktbereich (K) gegenüberliegen.

4. Sitzlängsversteller (3) nach Anspruch 3,
wobei die jeweilige überstehende Kante (15.2) und der zugehörige Kontaktbereich (K) derart eingerichtet sind, dass bei einer Horizontalbewegung von Oberschiene (11) und Unterschiene (12) zueinander oder von Unterschiene (12) und Verriegelungsteil (21) zueinander in Längsrichtung (X) jeweils in der Verriegelungsstellung (VS) des Verriegelungsteils (21) infolge einer mechanischen Beanspruchung zumindest eine der überstehenden Kanten (15.2) in Eingriff oder in weiteren Eingriff mit der inneren Wandfläche (WF1, WF2) im zugehörigen Kontaktbereich (K) gelangt.

5. Sitzlängsversteller (3) nach Anspruch 3 oder 4,
wobei die jeweilige überstehende Kante (15.2) und die innere Wandfläche (WF1, WF2) derart eingerichtet sind, dass bei einer Horizontalbewegung von Oberschiene (11) und Unterschiene (12) zueinander oder von Unterschiene (12) und Verriegelungsteil (21) zueinander in Längsrichtung (X) jeweils in der Verriegelungsstellung (VS) des Verriegelungsteils (21) infolge einer mechanischen Beanspruchung die überstehende Kante (15.2) im zugehörigen Kontaktbereich (K) in diese innere Wandfläche (WF1, WF2) eindringt und/oder diese innere Wandfläche (WF1, WF2) verformt oder deformiert.

6. Sitzlängsversteller (3) nach Anspruch 5,
wobei die überstehende Kante (15.2) den zugehörigen Kontaktbereich (K) derart verformt oder deformiert und/oder derart in diesen zugehörigen Kontaktbereich (K) eindringt, dass das Verriegelungsteil (21) zwischen Oberschiene (11) und Unterschiene (12) in der Verriegelungsstellung (VS) verbleibt.

7. Sitzlängsversteller (3) nach einem der vorhergehenden Ansprüche,
wobei die Öffnungen (16) und/oder die Durchbrüche (14) schräge Flanken aufweisen.

8. Sitzlängsversteller (3) nach einem der vorhergehenden Ansprüche,
wobei zumindest die Kontaktbereiche (K) der Unterschiene (12) und/oder der Oberschiene (11) aus einem weicheren Material gebildet sind als das Material des Verriegelungsteils (21) und/oder der zahnartigen Vorsprünge (15).

9. Sitzlängsversteller (3) nach einem der vorhergehenden Ansprüche,
wobei alle zahnartigen Vorsprünge (15) an beiden Zahnflanken einen Unterschnitt (15.1) aufweisen.

10. Sitzlängsversteller (3) nach einem der vorhergehenden Ansprüche,
wobei die zahnartigen Vorsprünge (15) im Schnitt eine T-Form aufweisen.

11. Sitzlängsversteller (3) nach einem der vorhergehenden Ansprüche,
wobei der Unterschnitt (15.1) mittels eines Umformschritts, insbesondere in einem Presswerkzeug mittels eines Schnittspalts oder in einem Stanzwerkzeug oder in einem Prägewerkzeug mittels eines Stempels oder in einem Schneidpresswerkzeug oder mittels Wälzstoßens, in den jeweiligen zahnartigen Vorsprung (15) eingebracht ist.

## Claims

1. Longitudinal seat adjuster (3), especially for a vehicle seat, comprising at least:
- two rail pairs (10) arranged at a distance from each other, formed respectively by two rails, an upper rail (11) and a lower rail (12), wherein the upper rail (11) is provided with openings (16, 16') and the lower rail (12) has through holes (14), and
- at least one spring-loaded, movable locking member (21), which is held on the upper rail (11) and which blocks a movement of the upper rail (11) in the lower rail (12) in a locked position (VS), and which carries toothlike protrusions (15) on its two opposite lengthwise sides, which are movable from a released position (FS) into the locked position (VS) both into the openings (16) and into the through holes (14),
wherein the locking member (21) secures the upper rail (11) and lower rail (12) in the locked position (VS), wherein the openings (16) and/or the through holes (14) have contact regions (K) for the toothlike protrusions (15) of the locking member (21) and at least some of the toothlike protrusions (15) have a respective undercut (15.1) on both tooth flanks (ZF1, ZF2),
wherein in the locked position (VS) of the locking member (21) a projecting edge (15.2) resulting from the undercut (15.1) on the respective tooth flank (ZF1, ZF2) lies opposite the contact region (K) in the respective opening (16) or in the through hole (14) and/or touches this contact region (K).

2. Longitudinal seat adjuster (3) according to Claim 1,
wherein during a horizontal movement of the upper rail (11) and lower rail (12) relative to each other or of the lower rail (12) and the locking member (21) relative to each other in the lengthwise direction (X) respectively in the locked position (VS) of the locking member (21) as a result of a mechanical stress, the projecting edge (15.2) and the contact region (K) are arranged in such a way that the projecting edge (15.2) deforms the contact region (K) and/or penetrates into it.

3. Longitudinal seat adjuster (3) according to Claim 1 or 2, wherein the respective opening (16) and/or the respective through hole (14) have inner wall surfaces (WF1, WF2) facing each other and the projecting edges (15.2) of the two tooth flanks (ZF1, ZF2) of at least one of the toothlike protrusions (15) in the locked position (VS) lie against the inner wall surfaces (WF1, WF2) in the respective contact region (K) without a gap or lie opposite this contact region (K) with a gap (S).

4. Longitudinal seat adjuster (3) according to Claim 3,
wherein the respective projecting edge (15.2) and the corresponding contact region (K) are arranged in such a way that, during a horizontal movement of the upper rail (11) and lower rail (12) relative to each other or of the lower rail (12) and the locking member (21) relative to each other in the lengthwise direction (X) respectively in the locked position (VS) of the locking member (21) as a result of a mechanical stress, at least one of the projecting edges (15.2) comes into engagement or into further engagement with the inner wall surface (WF1, WF2) in the corresponding contact region (K).

5. Longitudinal seat adjuster (3) according to Claim 3 or 4,
wherein the respective projecting edge (15.2) and the inner wall surface (WF1, WF2) are arranged in such a way that, during a horizontal movement of the upper rail (11) and lower rail (12) relative to each other or of the lower rail (12) and the locking member (21) relative to each other in the lengthwise direction (X) respectively in the locked position (VS) of the locking member (21) as a result of a mechanical stress, the projecting edge (15.2) in the corresponding contact region (K) penetrates into this inner wall surface (WF1, WF2) and/or deforms this inner wall surface (WF1, WF2).

6. Longitudinal seat adjuster (3) according to Claim 5,
wherein the projecting edge (15.2) deforms the corresponding contact region (K) in such a way and/or penetrates into this corresponding contact region (K) in such a way that the locking member (21) remains in the locked position (VS) between upper rail (11) and lower rail (12).

7. Longitudinal seat adjuster (3) according to one of the preceding claims, wherein the openings (16) and/or the through holes (14) have slanted flanks.

8. Longitudinal seat adjuster (3) according to one of the preceding claims, wherein at least the contact regions (K) of the lower rail (12) and/or the upper rail (11) are formed from a softer material than the material of the locking member (21) and/or the toothlike protrusions (15).

9. Longitudinal seat adjuster (3) according to one of the preceding claims, wherein all toothlike protrusions (15) on both tooth flanks have an undercut (15.1).

10. Longitudinal seat adjuster (3) according to one of the preceding claims, wherein the toothlike protrusions (15) have a T shape in cross section.

11. Longitudinal seat adjuster (3) according to one of the preceding claims, wherein the undercut (15.1) is introduced into the respective toothlike protrusion (15) by means of a forming step, especially in a pressing tool by means of a cutting gap or in a punching tool or in an embossing tool by means of a punch or in a cutting press tool or by means of shaping.

## Revendications

1. Dispositif de réglage longitudinal de siège (3), en particulier pour un siège de véhicule, comprenant au moins :
- deux paires de rails (10) disposées à distance l'une de l'autre, qui sont formées chacune de deux rails, un rail supérieur (11) et un rail inférieur (12), le rail supérieur (11) étant pourvu d'ouvertures (16, 16') et le rail inférieur (12) présentant des orifices (14), et
- au moins une partie de verrouillage mobile sollicitée par ressort (21), qui est retenue sur le rail supérieur (11) et qui, dans une position de verrouillage (VS), bloque un déplacement du rail supérieur (11) dans le rail inférieur (12) et qui supporte, au niveau de ses deux côtés longitudinaux opposés, des saillies de type dents (15) qui peuvent être déplacées d'une position de libération (FS) dans la position de verrouillage (VS) à la fois dans les ouvertures (16) et dans les orifices (14),
la partie de verrouillage (21) fixant le rail supérieur (11) et le rail inférieur (12) dans la position de verrouillage (VS), les ouvertures (16) et/ou les orifices (14) présentant des zones de contact (K) pour les saillies de type dents (15) de la partie de verrouillage (21) et au moins certaine des saillies de type dents (15) présentant au moins, au niveau des deux flancs de dents (ZF1, ZF2), à chaque fois une contre-dépouille (15.1),
dans la position de verrouillage (VS) de la partie de verrouillage (21), une arête (15.2) en saillie depuis, et issue de, la contre-dépouille (15.1) au niveau du flanc de dent respectif (ZF1, ZF2), étant opposée à la zone de contact (K) dans l'ouverture respective (16) ou dans l'orifice (14) et/ou venant en contact avec cette zone de contact (K).

2. Dispositif de réglage longitudinal de siège (3) selon la revendication 1,
dans lequel, dans le cas d'un déplacement horizontal du rail supérieur (11) et du rail inférieur (12) l'un par rapport à l'autre ou du rail inférieur (12) et de la partie de verrouillage (21) l'un par rapport à l'autre dans la direction longitudinale (X), à chaque fois dans la position de verrouillage (VS) de la partie de verrouillage (21) suite à une sollicitation mécanique, l'arête en saillie (15.2) et la zone de contact (K) sont prévues de telle sorte que l'arête en saillie (15.2) déforme la zone de contact (K) et/ou pénètre dans celle-ci.

3. Dispositif de réglage longitudinal de siège (3) selon la revendication 1 ou 2,
dans lequel l'ouverture respective (16) et/ou l'orifice respectif (14) présentent des surfaces de parois intérieures mutuellement opposées (WF1, WF2) et les arêtes en saillie (15.2) des deux flancs de dents (ZF1, ZF2) d'au moins l'une des saillies de type dents (15) s'appliquent sans interstice dans la position de verrouillage (VS) contre les surfaces de parois intérieures (WF1, WF2) dans la zone de contact respective (K) ou sont en regard de cette zone de contact (K) avec un interstice (S).

4. Dispositif de réglage longitudinal de siège (3) selon la revendication 3,
dans lequel l'arête en saillie respective (15.2) et la zone de contact associée (K) sont prévues de telle sorte que dans le cas d'un déplacement horizontal du rail supérieur (11) et du rail inférieur (12) l'un par rapport à l'autre ou du rail inférieur (12) et de la partie de verrouillage (21) l'un par rapport à l'autre dans la direction longitudinale (X), à chaque fois dans la position de verrouillage (VS) de la partie de verrouillage (21) suite à une sollicitation mécanique, au moins l'une des arêtes en saillie (15.2) vienne en prise ou en prise supplémentaire avec la surface de paroi intérieure (WF1, WF2) dans la zone de contact associée (K).

5. Dispositif de réglage longitudinal de siège (3) selon la revendication 3 ou 4,
dans lequel l'arête en saillie respective (15.2) et la surface de paroi intérieure (WF1, WF2) sont prévues de telle sorte que dans le cas d'un déplacement horizontal du rail supérieur (11) et du rail inférieur (12) l'un par rapport à l'autre ou du rail inférieur (12) et de la partie de verrouillage (21) l'un par rapport à l'autre dans la direction longitudinale (X), à chaque fois dans la position de verrouillage (VS) de la partie de verrouillage (21) suite à une sollicitation mécanique, l'arête en saillie (15.2) pénètre dans la zone de contact associée (K) dans cette surface de paroi intérieure (WF1, WF2) et/ou déforme cette surface de paroi intérieure (WF1, WF2).

6. Dispositif de réglage longitudinal de siège (3) selon la revendication 5,
dans lequel l'arête en saillie (15.2) déforme la zone de contact associée (K) et/ou pénètre dans cette zone de contact associée (K) de telle sorte que la partie de verrouillage (21) entre le rail supérieur (11) et le rail inférieur (12) reste dans la position de verrouillage (VS).

7. Dispositif de réglage longitudinal de siège (3) selon l'une quelconque des revendications précédentes,
dans lequel les ouvertures (16) et/ou les orifices (14) présentent des flancs obliques.

8. Dispositif de réglage longitudinal de siège (3) selon l'une quelconque des revendications précédentes,
dans lequel au moins les zones de contact (K) du rail inférieur (12) et/ou du rail supérieur (11) sont formées d'un matériau plus tendre que le matériau de la partie de verrouillage (21) et/ou des saillies de type dents (15).

9. Dispositif de réglage longitudinal de siège (3) selon l'une quelconque des revendications précédentes,
dans lequel toutes les saillies de type dents (15) présentent une contre-dépouille (15.1) au niveau des deux flancs de dents.

10. Dispositif de réglage longitudinal de siège (3) selon l'une quelconque des revendications précédentes,
dans lequel les saillies de type dents (15) présentent, en coupe, une forme en T.

11. Dispositif de réglage longitudinal de siège (3) selon l'une quelconque des revendications précédentes,
dans lequel la contre-dépouille (15.1) est introduite dans la saillie respective de type dent (15) par une étape de déformation, en particulier dans un outil de pressage au moyen d'un interstice de coupe ou dans un outil d'estampage ou dans un outil de gaufrage au moyen d'un poinçon ou dans un outil de presse à découper ou au moyen d'outils-pignons.
